# EUROPEAN PATENT SPECIFICATION

(11) **EP 3 786 049 B1**
(45) Date of publication and mention of the grant of the patent: **03.05.2023**
(21) Application number: 20187747.9
(22) Date of filing: 02.07.2013
(51) Int. Cl.: B62K 25/08, F16F 9/46, B62K 25/04

(54) **SYSTEM FOR CONTROLLING A VEHICLE'S MOTION**
ANORDNUNG ZUR REGULIERUNG EINER FAHRZEUGBEWEGUNG
SYSTÈME DE CONTRÔLE DE MOUVEMENT D'UN VÉHICULE

(30) Priority: 02.07.2012 US 201261667327 P; 02.10.2012 US 201261709041 P; 15.03.2013 US 201313843704
(43) Date of publication of application: 03.03.2021
(62) Divisional of application: 13174817.0
(73) Proprietor: Fox Factory, Inc., Scotts Valley, CA 95066 (US)
(72) Inventor: ERICKSEN, Everet Owen, Braselton, GA 30517 (US); FOX, Robert C., Braselton, GA 30517 (US); MARKING, John, Braselton, GA 30517 (US)
(74) Representative: Greaves Brewster LLP

(56) References cited:
- US-A- 5 850 896
- US-A1- 2011 202 236

## Description

### BACKGROUND

### Field of the Invention

The present invention relates to a system for controlling a vehicle's motion and to a vehicle comprising the system. Embodiments of the disclosure generally relate to a damper assembly for a vehicle. More specifically, the disclosure relates to an adjustable damper for use with a vehicle suspension.

### Description of the Related Art

Vehicle suspension systems typically include a spring component or components and a dampening component or components. Typically, mechanical springs, like helical springs are used with some type of viscous fluid-based dampening mechanism and the two are mounted functionally in parallel. In some instances, a spring may comprise pressurized gas and features of the damper or spring are user-adjustable, such as by adjusting the air pressure in a gas spring. A damper may be constructed by placing a damping piston in a fluid-filled cylinder (e.g., liquid such as oil). As the damping piston is moved in the cylinder, fluid is compressed and passes from one side of the piston to the other side. Often, the piston includes vents there-through which may be covered by shim stacks to provide for different operational characteristics in compression or extension.

Conventional damping components provide a constant damping rate during compression or extension through the entire length of the stroke. Other conventional damping components provide mechanisms for varying the damping rate. Further, in the world of bicycles, damping components are most prevalently mechanical. As various types of recreational and sporting vehicles continue to become more technologically advanced, what is needed in the art are improved techniques for varying the damping rate.

US-A-5 850 896 discloses an electrically operated shock absorber that includes a pilot chamber and pilot valve which pilot valve is acted on by an electrical solenoid so as to control the damping characteristics of the shock absorber. An arrangement is provided for preventing total bumping of the pressure in the pilot chamber in the event of electrical failure and substituting a pressure responsive valve for controlling the damping characteristics when the electrical failure occurs. An improved piston construction and valving arrangement is also disclosed.

### SUMMARY

According to the present invention there is provided a system for controlling a vehicle's motion, which system comprises:
a vehicle suspension damper comprising a damper cylinder containing a damping fluid, and an electronic valve comprising a pilot valve assembly;
a first set of sensors configured to be coupled to the vehicle to sense vehicle motion and send control signals regarding these sensed vehicle motions to a control system of the vehicle suspension damper;
a power source coupled with the vehicle suspension damper;
the control system coupled with said power source and said vehicle suspension damper, said control system configured for receiving a control signal from said first set of sensors and for selectively activating said power source, wherein
upon a selective activation of said power source, said power source delivers a current to said vehicle suspension damper;
the arrangement being such that, in use, when the power source delivers a current to the vehicle suspension damper the current causes the pilot valve assembly either open or close, thereby creating a hard mode having maximum damping force or a soft mode that provides a moderate damping force, respectively, so that damping forces within the vehicle suspension damper may be increased and decreased in quick response to sensed movement of the vehicle;
wherein said electronic valve comprises:
   a primary valve, the pilot valve assembly coupled with said primary valve, said pilot valve assembly configured for metering a flow of fluid to said primary valve, in response to at least said sensing; and
   an orifice block coupled with said primary valve and comprising a control orifice therethrough, said control orifice configured for operating cooperatively with said pilot valve assembly in said metering said flow of fluid to said primary valve,
   characterized in that said control orifice comprises a permanently open pathway within said orifice block and positioned between a damper cylinder interior and a pilot pressure chamber of said pilot valve assembly, said control orifice configured for causing a pressure drop of damper fluid before it enters said pilot pressure chamber from said damper cylinder interior.

In some embodiments, said pilot valve assembly is configured for said metering a flow of fluid to said primary valve in response to at least any of the following: an electro-mechanical device; a manually adjustable needle and jet arrangement; and a pressure signal from an outside pressure source.

Preferably, said system said system further comprises:
a pressure relief valve covering a fluid port, said pressure relief valve configured for being biased in a closed position by a set of springs coupled therewith, and configured for opening in response to an interior damper pressure against said pressure relief valve being above a predetermined threshold, and wherein upon opening of said pressure relief valve, a portion of said fluid flows through said fluid port to reduce said interior damper pressure.

Advantageously, said control orifice is further configured for controlling a leak path at low shaft speeds.

Preferably, said control orifice is further configured for reducing a pressure within said primary valve at high shaft speeds.

In one embodiment said first set of sensors comprises a set of accelerometers.

Advantageously, said first set of sensors is configured to produce a control signal based upon sensed vehicle motion

Preferably, the system further comprises an adjuster configured for moving a pilot valve of said pilot valve assembly upon a receipt of said current.

Preferably, said sensors comprise a second set of sensors coupled with said vehicle and said vehicle suspension damper, said second set of sensors configured for sensing said vehicle motion, wherein said second set of sensors is different from said first set of sensors.

Advantageously, said power source comprises a solenoid.

Preferably, said pilot valve assembly comprises an adjustable pilot spool configured for controlling a pressure inside said primary valve.

Advantageously, said adjustable pilot spool comprises an electromagnetic pilot spool valve.

Preferably, said vehicle suspension damper further comprises:
a set of shims coupled to said primary valve, wherein a position of said adjustable pilot spool corresponds to an increase of pressure inside said primary valve and an increase of an axial force on said set of shims.

Advantageously, said vehicle suspension damper further comprises:
an armature coupled with said adjuster and said pilot valve assembly; and
a coil, wherein said coil electromagnetically interacts with said armature in response to a current delivered from a power source, wherein when said armature moves, an adjustable pilot spool of said pilot valve assembly moves in corresponding axial positions relative to said coil.

Preferably, an amount of said current to be delivered by said power source is predetermined.

Advantageously, said power source comprises a solenoid.

Preferably, said vehicle suspension damper further comprises:
a damper cylinder;
a base valve assembly comprising said pilot valve assembly, said primary valve, and said orifice block;
an elastic bladder; and
a first fluid flow path configured for providing a first fluid pathway for a movement of a first portion of said fluid through and between said damper cylinder, said base valve assembly, and said elastic bladder, wherein during at least one of a compression and a rebound of said vehicle suspension damper, said first portion of said fluid flows through said first fluid flow path, and during a damping of said compression and said rebound, said pilot valve assembly at least partially obstructs said first fluid flow path.

Advantageously, said pilot valve assembly comprises a pilot spool configured for obstructing a first flow port within said first fluid flow path between said damper cylinder and said elastic bladder.

Preferably, said vehicle suspension damper further comprises:
a second damping fluid flow path configured for providing a second fluid pathway for a movement of a second portion of said fluid from said damper cylinder, into said base valve assembly, such that said second portion of said fluid applies pressure against said primary valve, when said pilot valve assembly at least partially obstructs said first fluid flow path.

According to another aspect of the present invention there is provided a vehicle comprising a system as set out above.

### BRIEF DESCRIPTION OF THE DRAWINGS

FIG. 1A depicts an asymmetric bicycle fork having a damping leg and a spring leg.
FIG. 1B depicts a cross-sectional side elevation view of a shock absorber of a bicycle fork cartridge, in accordance with an embodiment.
FIG. 2, FIG. 3, and FIG. 4 depict a cross-sectional side elevation view of various operational positions of an embodiment of the base valve assembly of detail 2 of FIG. 1B.
FIG. 5A and FIG. 5B depict a cross-sectional side elevation view of a valve assembly of detail 2 of the shock absorber of FIG. 1B, in accordance with an embodiment.
FIG. 6 and FIG. 7 each depicts a cross-sectional side elevation view of the valve assembly of detail 2 of the shock absorber of FIG. 1B, in accordance with an embodiment.
FIG. 8A and FIG. 8B depict a cross-sectional side elevation view of a shock absorber, in accordance with an embodiment.
FIGS. 9-13 depict a cross-sectional side elevation view of the base valve assembly of detail 2 of FIG. 1B, including a "latching solenoid", in accordance with an embodiment.
FIG. 14 depicts an arrangement of an embodiment on an example vehicle, in accordance with an embodiment.
FIG. 15 depicts an example vehicle suspension damper, in accordance with an embodiment.
FIGS. 16A-16C depict an electronic valve, in accordance with an embodiment.

The drawings referred to in this description should be understood as not being drawn to scale except if specifically noted.

### DESCRIPTION OF EMBODIMENTS

Reference will now be made in detail to embodiments of the present technology, examples of which are illustrated in the accompanying drawings. While the technology will be described in conjunction with various embodiment(s), it will be understood that they are not intended to limit the present technology to these embodiments. On the contrary, the present technology is applicable to alternative embodiments, modifications and equivalents, which may be included within scope of the invention as defined by the appended claims.

Furthermore, in the following description of embodiments, numerous specific details are set forth in order to provide a thorough understanding of the present technology. However, the present technology may be practiced without these specific details. In other instances, well known methods, procedures, and components have not been described in detail as not to unnecessarily obscure aspects of the present disclosure.

Embodiments of vehicle suspension dampers described herein may include a valve assembly. The valve assembly may be used to regulate damping fluid flow in different parts of the suspension damper. For example, the valve assembly may be part of a base valve in a hydraulic suspension damper, such as a suspension fork and/or rear shock for a bicycle or motorcycle. Additionally or alternatively, the valve assembly may be included as part of a main piston assembly of the vehicle suspension damper, and may be used to control damping in compression and/or rebound. Additionally or alternatively, the valve assembly may be used to regulate damping fluid flow between a main damping chamber of the damping assembly and a reservoir, the reservoir for accommodating damping fluid as a piston shaft enters the main damping chamber in compression. The principle of operation of the valve assembly has wide application in vehicle suspension dampers; for example, by scaling the size of the valve assembly appropriately, it can be used in vehicles as small and light as bicycles (e.g. in the forks and/or rear shocks), and as heavy as military vehicles.

Embodiments provide a system for controlling a vehicle's motion by increasing and/or decreasing damping forces within a vehicle suspension damper in quick response to sensed movement of the vehicle. Embodiments may be used in various types of vehicles, such as, but not limited to, bicycles, Side by Sides (four-wheel drive off-road vehicle), snow mobiles, etc. Embodiments include a set of sensors coupled with a vehicle suspension damper having a electronic valve. Embodiments provide for a quicker response time, such as selectively applying damping forces, to terrain changes than the timing of responses from conventional vehicle suspension dampers.

Conventional inertia valves of conventional vehicle suspension dampers are mechanical. The conventional mechanical inertia valve operates to respond to a terrain change by applying damping forces when a vehicle's motion is sensed. However, by the time that the mechanical inertia valve senses the vehicle motion and then actually applies the damping force, the vehicle rider has already experienced some type of response to the varied terrain. For example, the vehicle rider might feel the vehicle's initial response to running over a large rock. Mechanical inertia valves have a response time that is measured at the speed of sound or less. Thus, a shock wave from a vehicle hitting a bump will be received and felt by the vehicle rider before the mechanical inertia valve can open and provide a "soft" ride. (A "soft" vs. "hard" mode of an inertia valve is explained below.)

Embodiments of the present technology include a set of sensors attached to the vehicle to sense vehicle motion and send control signals regarding these sensed vehicle motions to a control system of a vehicle suspension damper. The control system activates a power source of the vehicle suspension damper. The power source delivers a current to the electronic valve. The current causes a pilot valve assembly of the electronic valve to either open or close, thereby creating a "hard" mode having maximum damping force or a "soft" mode that provides a moderate damping force, respectively. Of significance, embodiments also enable components therein to provide damping functions other than via responding to a current delivered from a power source. The following lists some examples of alternative embodiments that operate to provide damping functions; it should be appreciated that the list is not exhaustive. In one example, a range of damping force may be manually selected by a user by manually adjusting a needle and jet arrangement. In another example, if the valve assembly is located on the main piston 245, a position sensitive bottom-out needle arrangement may provide for a needle engaging a jet deep into the travel of the suspension, thereby influencing a damping. Another example includes a pneumatic source (e.g., air bag springs) on a semi-truck, in which the pneumatic source drives pressure in the pilot pressure chamber 1520. As the vehicle is loaded and thereby decreases the semi-truck's ride height, the air bag pressure is increased to enable the vehicle to return to the proper ride height. This increase in air pressure also corresponds to an appropriate increase in damping. Thus, in various embodiments: 1) if the set of sensors did not exist, or became inoperable for some reason, the components within embodiments are still enabled to provide damping functions; and/or 2) if the power source for some reason became unavailable, the components within embodiments are still enabled to provide damping functions. As described herein, various embodiments provide some damping function options in addition to the operation of the set of sensors in combination with the inertia valve. These options include the following: an electro-mechanical device (e.g., solenoid, latching solenoid, electric motor, piezoelectric actuator); a manually adjustable needle and jet arrangement; and a pressure signal from an outside pressure source (e.g., suspension air bag).

When a vehicle moves, a set of sensors, such as a set of accelerometers, in accordance with an embodiment, sense the vehicle's acceleration first. Subsequent to the sensing of the vehicle's acceleration, the vehicle's velocity is sensed, and then the vehicle's displacement is sensed. The set of sensors sends a control signal to the control system of the vehicle suspension damper as soon as the acceleration is sensed. Thus, in contrast to the use of conventional mechanical inertia valves, a damping force is caused to be applied by the electronic valve prior to the vehicle rider experiencing any response to terrain changes. In contrast to embodiments, the conventional mechanical inertia valve responds to a terrain change at the speed of sound or slower, such that the vehicle rider experiences a pressure wave before the conventional mechanical inertia valve is able to apply a damping force.

Additionally, and of significance, embodiments include a control or orifice block with a control orifice therein. The control orifice functions to meter fluid flowing through the vehicle suspension damper such that the control orifice provides additional damping functions. The control orifice and the advantages thereof will be described in more detail below.

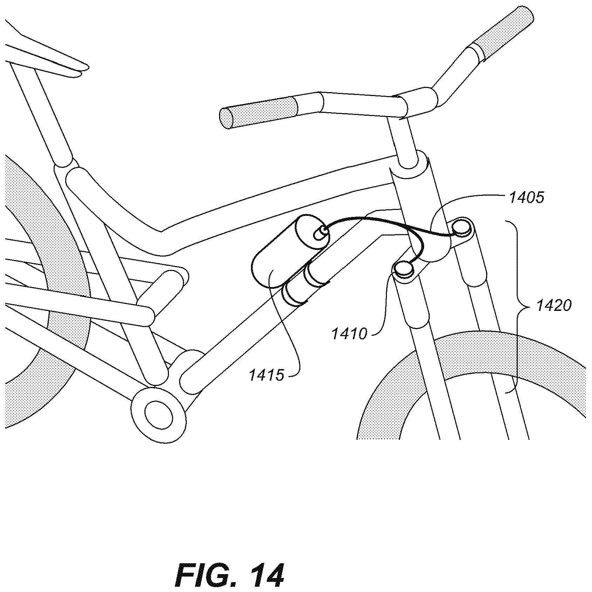

Figure 14 shows a bicycle 1405, in accordance with an embodiment, having attached thereto a vehicle suspension damper 1410 and a set of sensors 1415. The vehicle suspension damper 1410, in this particular embodiment, is located within the front fork 1420 of the bicycle 1405. The set of sensors 1415 is configured for sensing a type of vehicle motion, such as tilt (roll), acceleration, velocity, etc. Further, the set of sensors 1415 may be positioned anywhere on the vehicle that enables the receipt of accurate sensed information and which enables communication of a control signal (regarding the sensed information) to the vehicle suspension damper 1410.

For example, in one embodiment, if the set of sensors 1415 senses that the vehicle is experiencing acceleration, the set of sensors 1415 sends a control signal to the vehicle suspension damper 1410.

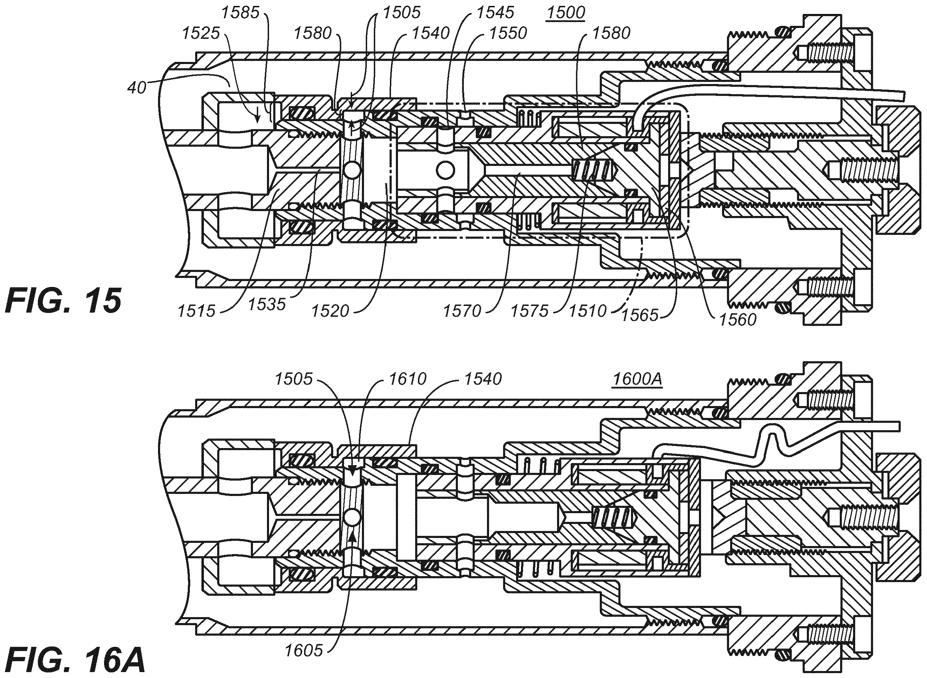

Figure 15 shows the vehicle suspension damper 1410, in accordance with an embodiment. The vehicle suspension damper 1410 includes an electronic valve 1500. The electronic valve 1500 includes at least a primary valve 1505, a first pressure reducing means which in this embodiment is an orifice block 1515, and a second pressure reducing means which in this embodiment is a pilot valve assembly 1510, all of which components cooperatively control the flow of fluid throughout the inertia valve and manipulate the fluid pressure within the pilot pressure chamber 1520.

In basic operation, the permanent magnet 1560 of the solenoid assembly 1580 conducts through the component 1565 to attract the pilot spool 1570. This is the latched position as shown. The spool spring 1575 resists this condition. When the coil is turned on with positive polarity, it cancels the effect of the permanent magnet 1560 and the spool spring 1575 moves the pilot spool 1570 to the left or closed position. With negative polarity applied to the coil, the electromagnet is added to the permanent magnet 1560 and the pilot spool 1570 is drawn to the right or open position.

The main oil flow path, or first fluid flow path, is through the center of the base valve and radially outwardly into piston port area 1525. Assuming there is enough pressure in the piston ports, it then blows off the valve shims 1530 and oil flows into the reservoir 40. A small amount of oil also flows in parallel through a second fluid flow path in the inertia valve 1500, and in particular through the control orifice 1535 and through the solenoid assembly 1580. This generates a pilot pressure inside the area of the primary valve 1505.

The valve member 1540 acts to resist the valve shims 1530 from opening. This resistive force is dependent on pressure inside the area of the primary valve 1505 which is controlled by the pressure drop across the solenoid. Basically, when the solenoid is closed, there is high pressure inside the area of the primary valve 1505 (resulting in locked-out fork or firm damping, depending on the damping characteristics determined for the inertia valve 1500, as described in greater detail below). When the solenoid is open, there is low pressure inside the area of the primary valve 1505 and the valve member 1540 pushes against valve shims 1530 with less force, allowing the valve shims 1530 to open under lower fluid pressure. This open position of the solenoid provides a normally-operating fork, by which is meant the damping characteristic of the inertia valve is determined predominantly by the tuning of the valve shims 1530 (although there is some damping effect provided by the control orifice 1535).

A more particular description follows. A control signal instructs the vehicle suspension damper 1410 to increase or decrease its damping force therein. The vehicle suspension damper 1410 is configured to respond to the control signal instruction. More particularly, the inertia valve of the vehicle suspension damper 1410, in response to the control signal instruction, quickly manipulates the pressure in the pilot pressure chamber 1520 of the inertia valve by moving/adjusting itself to at least partially close or open the flow ports 1550. The pressure in the pilot pressure chamber 1520 increases or decreases in proportion to the amount of closure or opening that the flow ports 1550 experience, respectively.

In general, in embodiments, fluid in the inertia valve flows along a first fluid flow path from the damping cylinder interior 35 and through the shims 1530 (unless the shims 1530 are held closed under pressure from the valve member 1540, as will be described herein) via the piston port area 1525. Additionally, fluid also flows along a second fluid flow path from the damping cylinder interior 35 and through the control orifice 1535 of the orifice block 1515. After having flowed through the control orifice 1535, the fluid moves into the pilot pressure chamber 1520. From the pilot pressure chamber 1520, the fluid moves out of the pilot spool valve 1545 (wherein the pilot spool valve 1545 is in at least a partially open position) through a set of flow ports 1550 and into the reservoir 40. Additionally, from the pilot pressure chamber 1520, the fluid also moves into the area of the primary valve 1505. When the fluid presents a predetermined pressure against surface 1580 of the valve member 1540, a force proportional to the pressure is exerted on the valve member 1540 which urges it against the shims 1530. The valve member 1540 pushes against the shims 1530, thereby biasing the shims 1530 toward a closed position, even though fluid is moving through the shims 1530 from the piston port area 1525 and into the reservoir 40. If the force of the valve member 1540 against the shims 1530 is greater than the force of the fluid moving from the piston port area 1525 against the shims 1530, then the shims 1530 will become biased toward closing. Likewise, if the force of the fluid moving from the piston port area 1525 against the shims 1530 is greater than the force of the valve member 1540 against the shims 1530, then the shims 1530 will be biased toward an open position, in which the fluid may remain flowing through the shims 1530.

During compression of the shock absorber, in order to change the fluid pressure within the pilot pressure chamber 1520 in quick response to changes in the vehicle's position and speed, for example, embodiments use a control system to receive control signals from the set of sensors 1415. In accordance with the control signals received from the set of sensors 1415, the control system activates a power source that is attached to the inertia valve. The power source delivers a current to the inertia valve. The inertia valve responds to the delivered current by causing the pilot valve assembly 1510 to move and block or open at least a portion of the flow ports 1550 through which fluid may flow there through from the pilot pressure chamber 1520 and into the reservoir 40, thereby at least partially closing or opening the flow parts 1550.

In general, upon compression of the shock absorber, the damper piston 5 moves into the damper cylinder interior 35. More particularly, when the flow ports 1550 are at least partially closed, the fluid pressure within the pilot pressure chamber 1520 increases such that the fluid pressure in the area of the primary valve 1505 also increases. This increase in the fluid pressure in the area of the primary valve 1505 causes the valve member 1540 to move toward the shims 1530 that are open and to push against the shims 1530, thereby causing the shims 1530 to at least partially or fully close. When these shims 1530 are at least partially or fully closed, the amount of fluid flowing there through decreases or stops. The movement of the damper piston 5 into the damper cylinder interior 35 causes fluid to flow through the piston port area 1525 and hence out through open shims 1530 and into the reservoir 40. The fluid also flows through the control orifice 1535 into the pilot pressure chamber 1520. If the shims 1530 are closed due to movement of the pilot valve assembly 1510 to block the flow ports 1550, then fluid may not flow out through the shims 1530 or out through the flow ports 1550 into the reservoir 40. Consequently, the ability of the damper piston 5 to move within the damper cylinder interior 35 to cause fluid to flow through the piston port area 1525 as well as through the flow ports 1550 is reduced or eliminated. The effect of the at least partial closure of the shims 1530 is to cause a damping function to occur. Thus, the movement of the pilot valve assembly 1510 to at least partially block the flow ports 1550 causes the damping (or slowing of movement) of the damper piston 5 into the damper cylinder interior 35.

In various embodiments, the control orifice 1535 operates cooperatively with the pilot valve assembly 1510 to meter the flow of fluid to the primary valve 1505. The control orifice 1535 is a pathway within the orifice block 1515 and is positioned between the damper cylinder interior 35 and the pilot pressure chamber 1520. The size of the control orifice 1535 is tunable according to the application; the size may be variously changed. The control orifice 1535 is a key component in enabling the quick and accurate response to sensed changes in a vehicle's motion. As will be explained herein, without the presence of the control orifice 1535, the vehicle would not experience damping during periods of low compression speed, or experienced too much damping during periods of high compression speeds. The pilot valve assembly 1510 would act like a bypass. In other words, without the control orifice, at low compression speed there would almost be no damping and the control orifice 1535 and pilot valve assembly 1510 would act like a bypass; but at higher compression speeds, pressure drop across the pilot valve assembly 1510 would cause a high pressure in the pilot pressure chamber 1520 and therefore too much clamping force on the shims 1530. The control orifice 1535, thus, allows damping to occur even during periods of low compression speed, and slows the damping rate during period of high compression speed.

In this particular embodiment, it was discovered that (without the control orifice 1535) if the area of the primary valve is approximately 60% or more of the area of the piston port 1525, the valve member 1540 is hydraulically locked (at all speeds) onto the shims 1530. This led to undesirable high damping force at high compression speeds. Although in this particular embodiment the hydraulic lock occurred at about 60% area ratio and higher, this may not be true in all cases: there may be arrangements where a lock occurs at a higher or lower ratio than 60%, or where no lock occurs at all at any ratio. It is expected that that the particular ratio will be dependent on design parameters such as the valve shim arrangement and main piston design.

The solution is to cause a pressure drop of damping fluid before it enters the pilot pressure chamber 1520. This is achieved with the control orifice 1535. The control orifice 1535 provides some damping effect at low compression speeds (by enabling damping fluid to 'bleed' through the control orifice), but at high compression speeds provides a significant pressure drop to ensure that the pressure inside the pilot pressure chamber does not get too high, thereby preventing the valve member 1540 from locking onto the shims 1530.

In its present form, the control orifice 1535 is between 0.5mm and 2mm in diameter, but these sizes are dependent on the specific application and the desired damping curve. Pressure drop is directly proportional to the length of the control orifice 1535, but inversely proportional to its diameter. Either one or both of these parameters can be changed at the design stage to affect the performance of the control orifice 1535.

The essential function, in embodiments, of the control orifice 1535 is to create a pressure drop. Therefore, anything that will do this could be used in place of the specific arrangement shown. Some possible examples include: a diffuser; a labyrinth between parallel plates; leakage past a screw thread; etc.

A further key feature of embodiments is the combination of the area of the surface 1580 inside the valve member 1540, the control orifice 1535, the pilot valve assembly 1510, and the way this combination enables a variable force to be applied to the shims 1530 to control the damping force at any point in time.

In particular, the ratio of the surface area 1585 of the shims 1530 (The surface area 1585 is next to the piston port area 1525; the pressure is acting on the surface area 1585 of the shims 1530 as well as the surface area 1580 of the inside of the valve member 1540, within the primary valve area 1505.to the area of the surface 1580 inside the valve member 1540 controls the overall damping characteristic of the inertia valve 1500, i.e., what overall range of force can be applied to the shims 1530. By selecting this ratio appropriately, the valve member 1540 can be set up to move between full lockout and a completely soft state, or between a firm damping state and a soft state, for example.

Within that overall range of force, a particular force at any point in time is set by the position of the pilot valve assembly 1510, which, as explained above, controls the pressure drop across the flow ports 1550. By adjusting the pressure drop across flow ports 1550, the pressure of fluid in the pilot pressure chamber 1520 is also adjusted. Since the pressure inside the pilot pressure chamber 1520 acts against surface 1580 of the valve member 1540, the force applied by the valve member 1540 to the shims is controllable by adjustment of the position of the pilot valve assembly 1510.

It should be noted that the overall resistance to fluid flow along the first fluid flow path (i.e. through piston port area 1525 and past shims 1530) is given by the sum of the force provided by the shims 1530, and the force applied to the shims 1530 by the valve member 1540.

A significant feature is that force is generated on the valve member 1540 by control of pressure inside the area of the primary valve 1505 (in contrast to other valve bodies where force comes from pressure acting on the outside of the valve member 1540, usually from the damper reservoir). The ultimate source of pressure in the pilot pressure chamber 1520 is the pressure of the damping fluid in the main damping cylinder 35 during compression (but regulated by the control orifice 1535 and the pilot valve assembly 1510 to give a lower pressure in the pilot pressure chamber 1520).

There are significant advantages to the combination of the ratio of the area of the surface 1580 to the area of the piston port 1525, control orifice 1535, and the pilot valve assembly 1510. Some of them are as follows: 1) the damping force generated by inertia valve 1500 is not temperature sensitive; 2) the damping force generated by inertia valve 1500 is not position sensitive; 3) when using an electro-mechanical inertia device to control the pilot valve assembly 1510, the damping force can be turned on and off very quickly (recent experiments achieved 4ms between full firm and full soft- to the best of the applicant's knowledge and belief the fastest turning on and off of damping force in other devices is 20ms. The reason such fast speeds are achieved is because, when the pressure in the pilot pressure chamber 1520 is released, it is the pressure in the main damper (which is the same as the fluid pressure in the piston port area 1525) that pushes on the shims 1530 and moves the primary valve assembly 1510 back (which can happen very quickly). This is in contrast to other arrangements that rely on an electric motor to move a valve body, for example, which takes more time; 4) using a latching solenoid pilot valve enables full firm state to be maintained with no power; 5) the pilot valve assembly 1510 enables very large damping forces to be controlled using the same pilot valve assembly 1510 - this is because: (a) the pilot pressure is 'magnified' according to the ratio of the area of the primary valve 1505 to the area of the piston port 1525; and (b) because the pilot valve assembly 1510 is not required to move any element against the high pressure damping fluid; and 5) the primary valve assembly 1510 allows the damper to utilise conventional shims, but with some level of controllability over the damping force applied by the shims. This allows the shims to be tuned in a conventional manner. Furthermore, if power to the pilot valve assembly 1510 fails, the shock absorber will continue to operate (in contrast to other electronically controlled shocks where power loss causes the shock to stop working completely).

Thus, the inertia valve 1500, including the primary valve 1505, the pilot valve assembly 1510, and the orifice block 1515, not only enables a variable force to be applied to shims 1530, but also enables the control of the damping force within the vehicle at any point in time. The pilot valve assembly 1510 meters a flow of fluid to the primary valve 1505 and enables the generation of relatively large damping forces by a relatively small solenoid (or other motive source), while using relatively low amounts of power.

Furthermore, since the incompressible fluid inside of the primary valve 1505 of the shock absorber assembly causes damping to occur as the primary valve 1505 opens and the valve member 1540 collapses, embodiments enable both a controllable preload on the shims 1530 and a controllable damping rate. In one embodiment, and particularly in 4 wheel vehicles, the solenoid continuously powers the inertia valve and does not have a latching mechanism. In one embodiment, a monitor will continuously monitor power source and its operation in order to make sure that the wires leading to the power source do not get cut, thereby providing a dangerous situation for the rider and other vehicles.

In regards to the area of the primary valve 1505, although it is shown as an internal base valve, it is not limited to this position or application. For example, it can be mounted externally of the vehicle suspension damper (for example in a 'piggy-back' reservoir). Further, it could be made part of the main damper piston (either in compression or rebound directions).

In considering the design of the control orifice 1535, it must have at least the following two functions: provision of low speed bleed; and provision of sufficient pressure drop at high speed to prevent hydraulic lock of the valve member 1540 onto the shims 1525. The general methodology for determining the diameter and/or length of the control orifice 1535 during design is as follows: (1) identify the desired damping curve that the damper should have; (2) determine from step (1) the target low speed damping force; (3) determine from step (1) the target high speed damping force; (4) make informed guess at control orifice diameter and/or length to achieve steps (2) and (3); (5) test the output damping forces produced by shock at different speeds within low to high speed range; (6) compare the measured damping curve against the desired damping curve; (7) if there is too much high speed damping force, then reduce the diameter of the control orifice (to lower the pressure inside the pilot pressure chamber 1520); (8) if there is too much low speed damping force, then decrease the area ratio (between the area of the primary valve 1505 and the piston port area 1525), and increase the diameter of the control orifice 1535; and (9) repeat steps (5)-(8) until a good approximate to a desired damping curve is obtained. It is to be noted that in steps (7) and (8) the length of the control orifice can also be adjusted, either separately or in addition to the diameter, to achieve a similar effect.

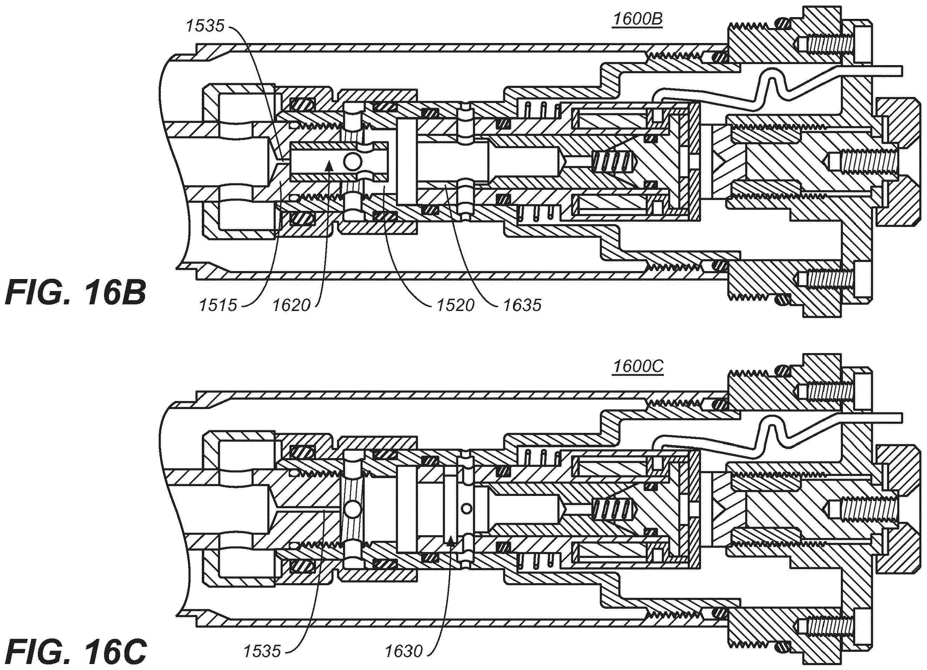

In various embodiments, it was found that the pilot valve assembly 1510 would "auto-close" at a certain oil high flow rate. In one embodiment, a diffuser pin inserted into the vehicle suspension damper downstream of the control orifice 1535 is used to eliminate this auto-closing issue. Figure 16A shows an electronic valve 1600A with a diffuser pin 1605 positioned through one set of the cross holes 1610 going to the primary valve area 1505, in accordance with an embodiment. Another set of holes remains (normal to the page) to feed oil to the valve member 1540. The diffuser pin 1605 functions to disrupt the jet flow coming out of the control orifice 1535. Figure 16B shows an electronic valve 1600B with a diffuser plug 1620 pressed into, at least one of and at least partially, the orifice block 1515 and the pilot pressure chamber 1520, in accordance with an embodiment. The diffuser plug 1620 also functions to disrupt the jet flow coming out of the control orifice 1535. Figure 16C shows an electronic valve 1600C with a diffuser pin 1630, in accordance with an embodiment. In this embodiment, the spool retainer 1635 (see Figure 16B) is replaced with the diffuser pin 1630. The diffuser pin 1630 and its position within the vehicle suspension damper 1600C functions to disrupt the jet flow coming out of the control orifice 1535 and to minimize the contact of the pilot spool assembly 1510 in the firm setting.

In another embodiment, the solenoid includes a "latching" mechanism to open and close the pressure-balanced pilot spool. Due to the latching configuration of the solenoid, power is only required to open or close the pilot valve assembly 1510. Power is not required to hold the pilot valve assembly 1510 open or closed in either setting. Consequently, embodiments enable reduced power consumption compared to the traditional shock absorber.

Further embodiments provide an externally-adjustable means of tuning the open state of the damper. An adjuster turns in or out to vary the effective orifice size of the pilot spool valve 1545 when in the open position. This allows the rider to adjust the soft setting of the damper to his preference.

In the embodiment described above in conjunction with Figs. 14 and 15 it is to be noted that, whilst preferred, the use of a valve shims 1530 is optional. Instead, it would be possible for the valve member 1540 to act directly on the fluid flow ports 1525. In fact, valve shims are optional in any such embodiment described herein where it would be possible for the valve member 1540 (or any other similar valve member described herein) to act directly on the fluid flow ports that control the main flow through the valve assembly.

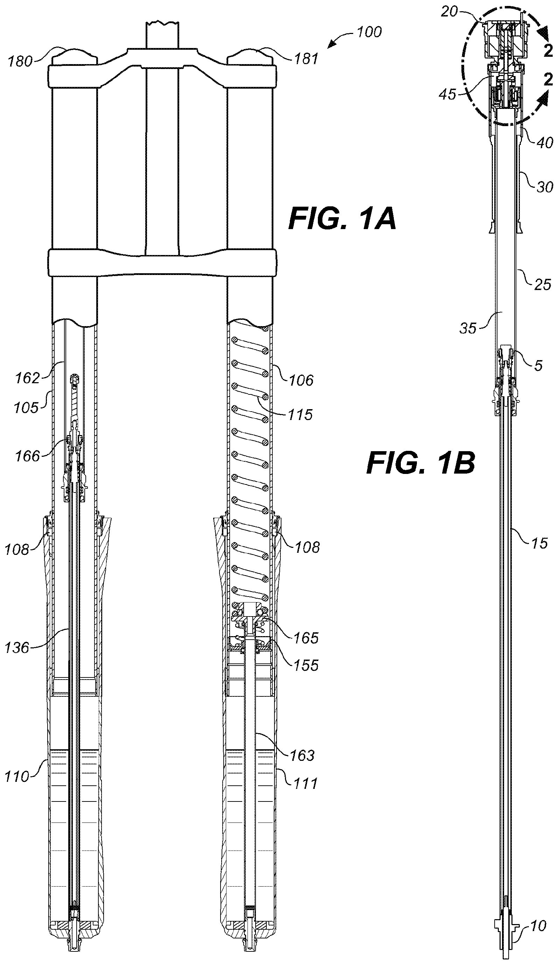

The following discussion describes the FIGS. 1-8B and embodiments shown therein.

Integrated damper/spring vehicle shock absorbers often include a damper body surrounded by or used in conjunction with a mechanical spring or constructed in conjunction with an air spring or both. The damper often consists of a piston and shaft telescopically mounted in a fluid filled cylinder. The damping fluid (i.e., damping liquid) or damping liquid may be, for example, hydraulic oil. A mechanical spring may be a helically wound spring that surrounds or is mounted in parallel with the damper body. Vehicle suspension systems typically include one or more dampers as well as one or more springs mounted to one or more vehicle axles. As used herein, the terms "down", "up", "downward", "upward", "lower", "upper", and other directional references are relative and are used for reference only.

FIG. 1A shows an asymmetric bicycle fork 100 having a damping leg and a spring leg. The damping leg includes an upper tube 105 mounted in telescopic engagement with a lower tube 110 and having fluid damping components therein. The spring leg includes an upper tube 106 mounted in telescopic engagement with a lower tube 111 and having spring components therein. The upper legs 105, 106 may be held centralized within the lower legs 110, 111 by an annular bushing 108. The fork 100 may be included as a component of a bicycle such as a mountain bicycle or an off-road vehicle such as an off-road motorcycle. In some embodiments, the fork 100 may be an "upside down" or Motocross-style motorcycle fork.

In one embodiment, the damping components inside the damping leg include an internal piston 166 disposed at an upper end of a damper shaft 136 and fixed relative thereto. The internal piston 166 is mounted in telescopic engagement with a cartridge tube 162 connected to a top cap 180 fixed at one end of the upper tube 105. The interior volume of the damping leg may be filled with a damping liquid such as hydraulic oil. The piston 166 may include shim stacks (i.e., valve members) that allow a damping liquid to flow through vented paths in the piston 166 when the upper tube 105 is moved relative to the lower tube 110. A compression chamber is formed on one side of the piston 166 and a rebound chamber is formed on the other side of the piston 166. The pressure built up in either the compression chamber or the rebound chamber during a compression stroke or a rebound stroke provides a damping force that opposes the motion of the fork 100.

The spring components inside the spring leg include a helically wound spring 115 contained within the upper tube 106 and axially restrained between top cap 181 and a flange 165. The flange 165 is disposed at an upper end of the riser tube 163 and fixed thereto. The lower end of the riser tube 163 is connected to the lower tube 111 in the spring leg and fixed relative thereto. A valve plate 155 is positioned within the upper leg tube 106 and axially fixed thereto such that the plate 155 moves with the upper tube 106. The valve plate 155 is annular in configuration, surrounds an exterior surface of the riser tube 163, and is axially moveable in relation thereto. The valve plate 155 is sealed against an interior surface of the upper tube 106 and an exterior surface of the riser tube 163. A substantially incompressible lubricant (e.g., oil) may be contained within a portion of the lower tube 111 filling a portion of the volume within the lower tube 111 below the valve plate 155. The remainder of the volume in the lower tube 111 may be filled with gas at atmospheric pressure.

During compression of fork 100, the gas in the interior volume of the lower tube 111 is compressed between the valve plate 155 and the upper surface of the lubricant as the upper tube 106 telescopically extends into the lower tube 111. The helically wound spring 115 is compressed between the top cap 181 and the flange 165, fixed relative to the lower tube 111. The volume of the gas in the lower tube 111 decreases in a nonlinear fashion as the valve plate 155, fixed relative to the upper tube 106, moves into the lower tube 111. As the volume of the gas gets small, a rapid build-up in pressure occurs that opposes further travel of the fork 100. The high pressure gas greatly augments the spring force of spring 115 proximate to the "bottom-out" position where the fork 100 is fully compressed. The level of the incompressible lubricant may be set to a point in the lower tube 111 such that the distance between the valve plate 155 and the level of the oil is substantially equal to a maximum desired travel of the fork 100.

Referring now to FIG. 1B, a cross-sectional side elevation view of a shock absorber of a bicycle fork cartridge is depicted, in accordance with an embodiment. More particularly, FIG. 1B shows the inner portions of the bicycle fork leg assembly, comprising a damper piston 5. In practice, the top cap 20 is affixed to an upper tube (not shown) and the lower connector 10 is fixed to a lower leg tube (not shown) where the upper tube is typically telescopically mounted within the lower tube (although the reverse may also be the case). As the upper tube and the lower tube telescope in contraction or expansion in response to disparities in the terrain being traversed by a vehicle, including such for shock absorption, so also the damper piston 5 and piston rod 15 move telescopically into and out of damper cylinder 25. During compression, the volume of the piston rod 15 displaces, from the cylinder 25, a volume of damping liquid contained within the cylinder 25 corresponding to the volume of the piston rod 15 incurring into the damper cylinder 25. During extension or "rebound", the volume of liquid must be replaced as the piston rod 15 leaves the interior of the damper cylinder 25.

Damping liquid displaced as described above moves from the damper cylinder 25, through a base valve assembly of detail 2 and ultimately into an elastic bladder 30 during compression, and from the elastic bladder 30, back through the base valve assembly of detail 2 and into the damper cylinder 25 during rebound. In one embodiment, the base valve assembly of detail 2 allows for the compression damping to be adjusted by the user.

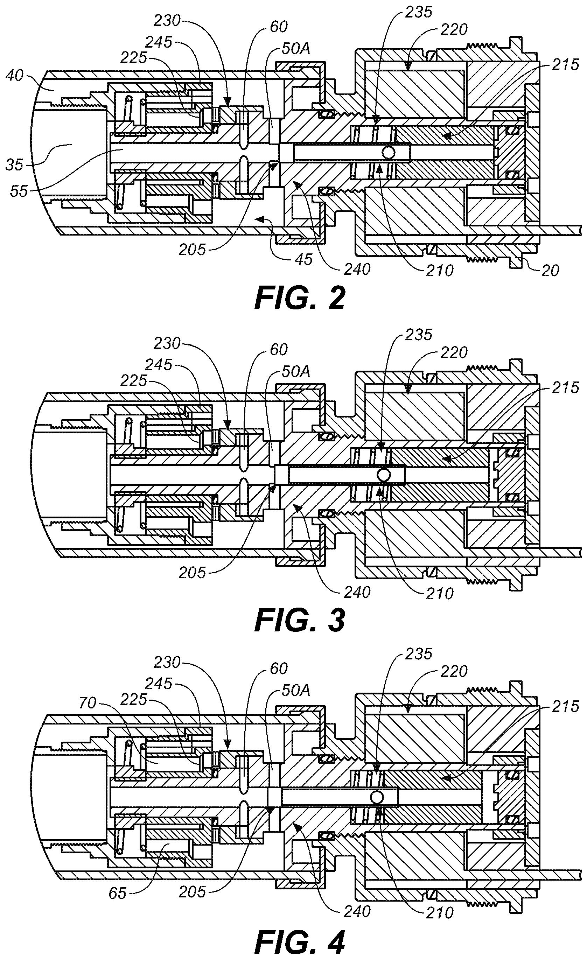

FIG. 2, FIG. 3, and FIG. 4 show cross-sectional side elevation views of various operational positions of an embodiment of the base valve assembly of detail 2 of FIG. 1B. FIGS. 2-4 show a continuously variable semi active arrangement, in accordance with embodiments, and as will be described in more detail below. In brief, a solenoid balanced by an armature biasing spring 235 axially locates a pressure-balanced pilot spool 210. The pressure-balanced pilot spool 210 controls the pressure inside the valve body 230. As this pressure is increased inside the valve body 230, the axial force of the valve body 230 on the conventional valve shim increases. Due to the pilot spool assembly arrangement, a relatively small solenoid (using relatively low amounts of power) can generate relatively large damping forces. Furthermore, due to incompressible fluid inside the valve body 230, damping occurs as the valve opens and the valve body 230 collapses. The result is not only a controllable preload on the valve stack, but also a controllable damping rate. Embodiments discussed herein may optionally be packaged in a base valve, the compression adjuster of a shock absorber, and/or on the main piston of a shock absorber.

FIG. 2 is a detailed view of the base valve assembly of detail 2 of FIG. 1B, with the valve shown in the retracted soft position. This retracted position corresponds to minimum or no current in the solenoid. In FIG. 2, a first damping fluid flow path between damping cylinder interior 35 and annular reservoir 40 (including bladder 30 interior; see FIG. 1B) is substantially unobstructed via bleed passage 55, ports 50A and upper annulus 45. (Also shown in FIG. 2 is the main piston 245.)

FIG. 3 is a detailed view of the base valve assembly of detail 2 of FIG. 1B, with the valve shown in the mid-damping position. This corresponds to medium current supplied to the solenoid. FIG. 3 shows a partial obstruction of ports 50A by metering edge 205 of the pilot spool 210.

FIG. 4 is a detailed view of the base valve assembly of detail 2 of FIG. 1B, with the valve shown in the firm-damping position. FIG. 4 shows substantial blockage of ports 50A by the metering edge 205 of the pilot spool 210, which is axially displaced relative to its position in FIG. 2.

Of note, the pilot spool 210 shown in FIG. 2 is in a retracted soft position, in which the metering edge 205 of the pilot spool 210 is not obstructing the ports 50A. However, the pilot spool 210 shown in FIG. 3 is in a middle position, in which the metering edge 205 of the pilot spool 210 is partially obstructing the ports 50A. The pilot spool 210 shown in FIG. 4 is in a firm position, in which the metering edge 205 of the pilot spool 210 is fully obstructing ports 50A.

In one embodiment, the axial displacement of the pilot spool 210 is facilitated by an electromagnetic interaction between the armature 215 and the coil 220. Adjustment of the current in the coil 220 (via modulation of the current from a power source [not shown]) to predetermined values causes the armature 215, and hence the pilot spool 210, to move in corresponding predetermined axial positions relative to the coil 220. As such, the pilot spool 210 can be adjusted as shown in the FIGS. 2-4.

When the pilot spool 210 is closing ports 50A, as shown in FIG. 4, substantially all damping fluid compression flow must flow through port 70 and valve shims 225. In addition, the damping fluid pressure acting through and in annulus 60 on an interior of the valve body 230 is increased and therefore the valve body 230 exerts more closing force of the valve shims 225. The net result is an increased compression damping due to closure of ports 50A and a further compression damping increase due to a corresponding pressure increase in the compression damping within annulus 60. When the pilot spool 210 is located in a middle position as is shown in FIG. 3, the foregoing results apply in a diminished way because some of the compression flow (albeit less than full compression flow) may flow through partially open ports 50A. The embodiment of FIG. 2 also exhibits some effect of pressure boosting via annulus 60 on the valve body 230, but the phenomenon occurs at higher compression rates.

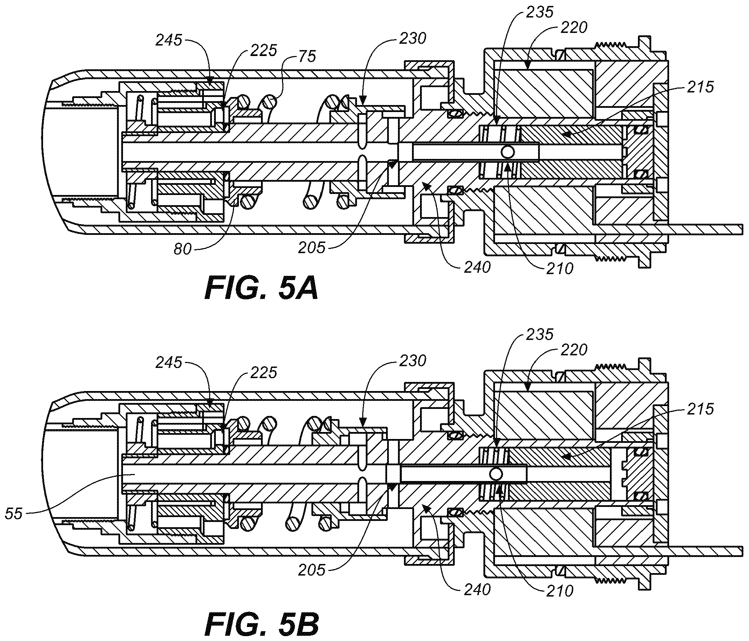

FIG. 5A and FIG. 5B depict a cross-sectional side elevation view of a valve assembly of detail 2 of the shock absorber of FIG. 1B, in accordance with an embodiment. FIG. 5A and FIG. 5B show an embodiment in which the valve body 230 acts on the valve shims 225 through a spring 75. In use, the valve body 230 increases or decreases the preload on the spring 75. FIG. 5A shows the pilot spool 210 in the retracted soft position, thereby causing the preload on the spring 75 to decrease. FIG. 5B shows the pilot spool 210 in the firm position, thereby causing the preload on the spring 75 to increase.

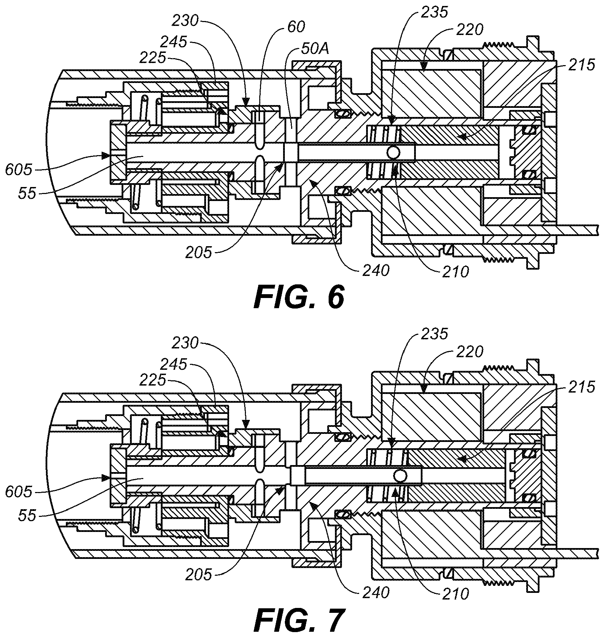

FIG. 6 and FIG. 7 depict a cross-sectional side elevation view of the valve assembly of detail 2 of the shock absorber of FIG. 1B, in accordance with an embodiment. FIG. 6 and FIG. 7 show an embodiment including a flow control orifice 605 for limiting flow through into the bleed passage 55 during compression. In limiting fluid flow, the flow control orifice 605 (by creating a pressure drop) places an upper limit on the amount of pressure in the annulus 60, and hence the amount of "boost" or closure force that the valve body 230 can exert on the valve shims 230. FIG. 6 shows the metering edge 205 of the pilot spool 210 obstructing ports 50A. FIG. 7 shows the metering edge 205 of the pilot spool 210 partially obstructing ports 50A.

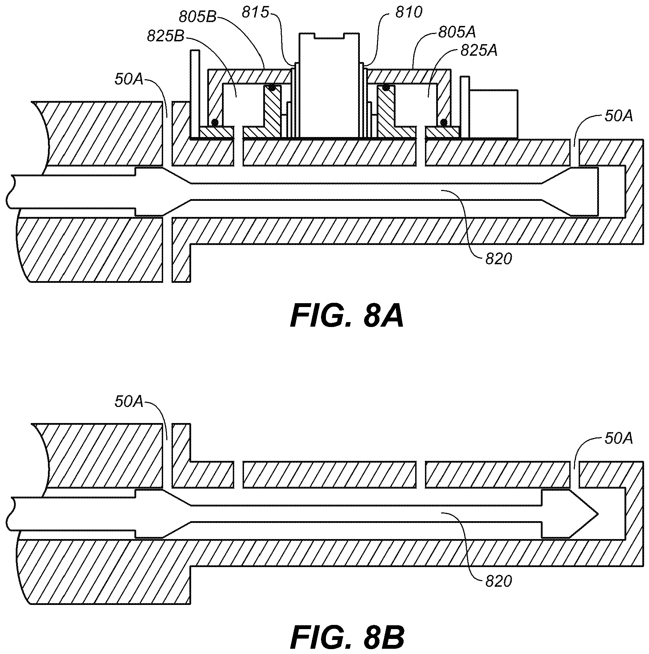

FIG. 8A and FIG. 8B depict a cross-sectional side elevation view of one end of a piston and piston rod assembly of a shock absorber, in accordance with an embodiment. More particularly, FIG. 8A shows an embodiment having a separate valve body 805A and 805B corresponding to each of a rebound shim set 810 and a compression shim set 815, respectively, where a pilot spool 820 (performing, in one embodiment, similarly to the pilot spool 210 of FIGS. 1-7 described herein) alternatingly opens one area (e.g., 825A [similar to function to annulus 60]) while closing the other area (e.g., 825B [similar in function to annulus 60]). Of note, FIG. 8A shows a "hard/soft configuration". For example, during compression, the area 825A and area 825B experience obstruction by a portion of the pilot spool 820, thereby creating a soft compression. During the rebound, the area 825A and area 825B are open to fluid flow, thereby creating a firm rebound. Thus, there would be a high amount of pressure experienced during rebound. However, for compression, the pressure is low, but there is no bleed. FIG. 8B shows a "hard/hard configuration" (a firm compression and a firm rebound), in accordance with an embodiment.

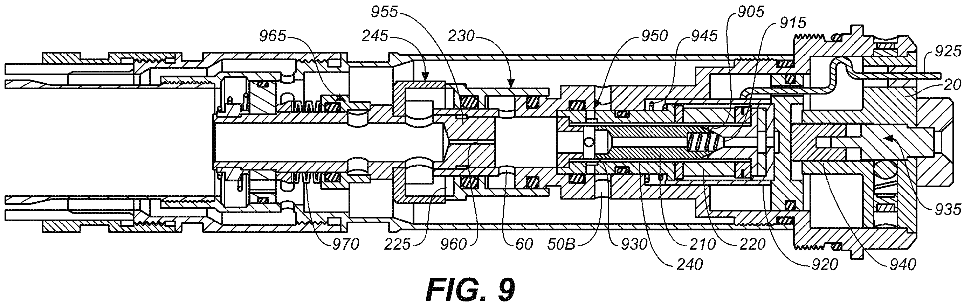

FIGS. 9-13 depicts a cross-sectional side elevation view of the base valve assembly of detail 2 of FIG. 1B, including a "latching solenoid", in accordance with an embodiment. Embodiments further provide, in brief and as will be described below, a low-power bi-state electronic damper. The low-power bi-state electronic damper uses a latching solenoid to open and close a pressure-balanced pilot spool. Given the latching configuration of the solenoid, power is required only to open or close but not to hold in it in either setting, in accordance with an embodiment. The result is low power consumption.

Additionally, a further embodiment provides an externally-adjustable means of tuning the open state of the damper. There is an adjuster that can be turned in or out to vary the effective orifice size of the pilot spool when in the open position. This will allow the rider to adjust the soft setting of the damper to his/her preference.

With reference now to FIG. 9, the latching solenoid 905 primarily uses power to facilitate a change in position of the pilot spool 210 relative to the coil 220 but requires little or no power to maintain the pilot spool 210 in the desired position once that is achieved. In one embodiment, the latching solenoid assembly 905 (or latching spool valve assembly) includes: a pilot spool 210 which includes a magnetically active material; a spring 915 which is normally in compression and biases the pilot spool 210 toward a position obstructing ports 50A; a permanent magnet 920; and a coil 220 where power is supplied to the coil 220 by (in one embodiment) wires 925. The aforementioned components may be contained within a housing 240 or "cartridge" as shown.

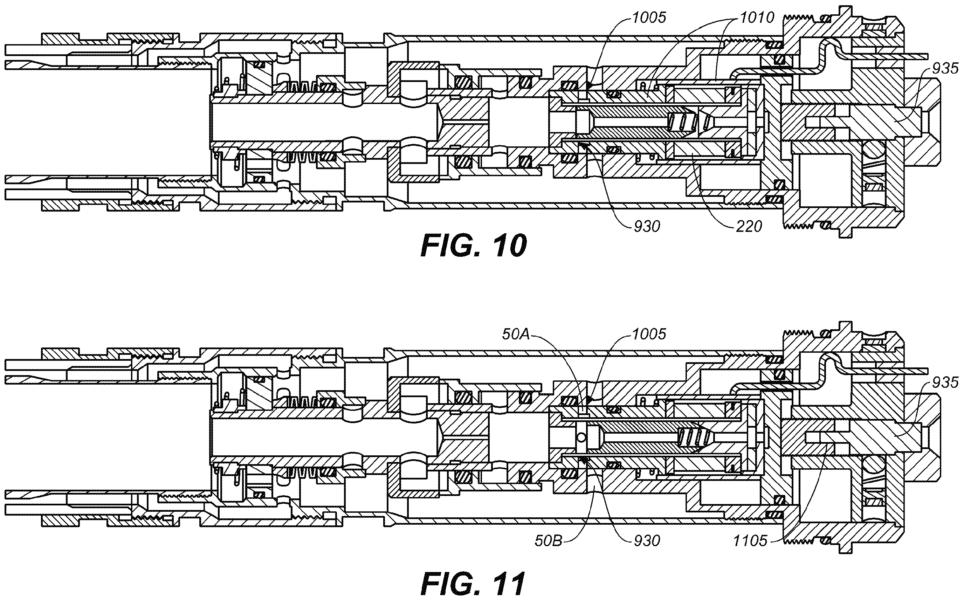

The pilot spool valve assembly (including at least the pilot spool 210 and the metering edge 930 of the pilot spool 210) regulates damping fluid flow through a portion of the damper and adjusts the force applied to the valve shims 225 by the valve body 230 through ports 60. In one embodiment, the position of the spool valve assembly may be adjusted axially by means of the low speed adjuster 935. The low speed adjuster 935 (comprising multiple pieces), being for example, threaded at its lower end to the top cap 20 via the low speed adjuster threads 940, may be rotated to facilitate axial movement. In one embodiment, the low speed adjuster 935 includes a non-round shape (e.g., hexagonal) that facilitates the rotation with relative axial movement (see 1105 of FIG. 11).

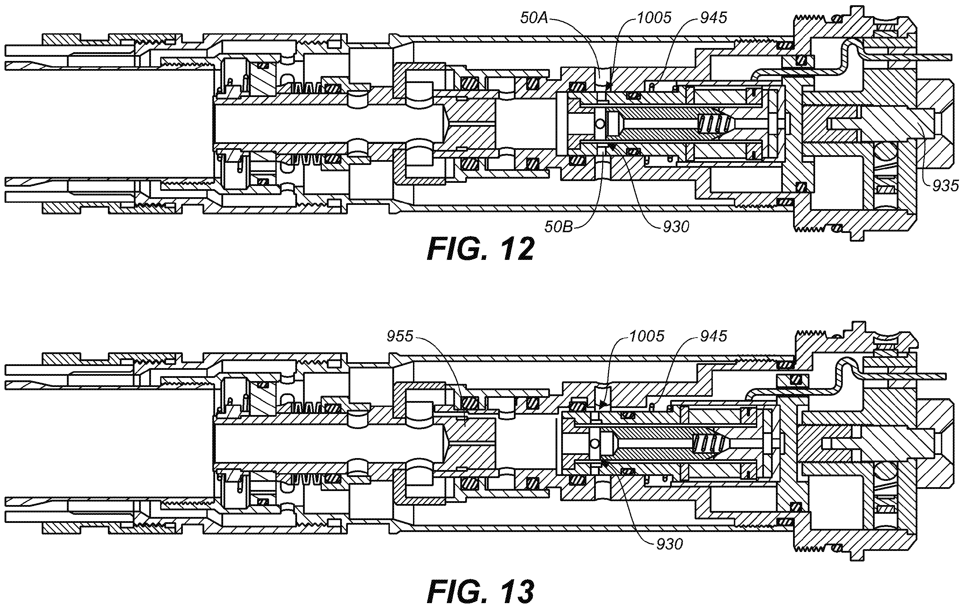

With reference now to FIGS. 9-13, when the lower portion of the low speed adjuster 935 moves downward axially, the cartridge of the pilot spool 210 is correspondingly moved and thereby further compresses the spring 915. As the cartridge is moved downward, the low speed adjuster metering edge 950 is moved into further obstruction of ports 50B, thereby restricting flow of damping fluid through the damper from an interior of the pilot spool valve assembly to an exterior of the damping assembly (note the open ports 50B shown in FIG. 12, in which the pilot spool valve 920 is shown in the open pilot position with the low speed adjuster 935 in the soft position).

In one embodiment, the pilot spool 210 is biased by spring 915 toward a position wherein the metering edge 930 of the pilot spool 210 further obstructs ports 50A (see FIG. 13, wherein the pilot spool 210 is shown in the open pilot position with the low speed adjuster 935 in the middle position). A force opposing the bias of the spring 915 is exerted on the magnetic component of the pilot spool 210 by the permanent magnet 920. When the pilot spool 210 is in its uppermost (corresponding to open ports 50A) position, it is retained by the magnetic force between the permanent magnet 920 and the pilot spool valve 925 where that force is sufficient to overcome the bias of the spring 915 (thereby holding the spring 915 in a compressed state). As such, when the pilot spool valve 925 and ports 50A are in the open position (see FIG. 12), no power input is required to maintain that state.

In one embodiment, when it is desired to close or partially close ports 50A by means of the metering edge 930 of the pilot spool 210, a current is applied to the coil 220 via the wires 925. The current causes a magnetic flux around the coil 220, which acts on the magnetic component of the pilot spool 210 causing the pilot spool 210 to move axially within the cartridge. When the pilot spool 210 has moved a relatively small distance axially away from the permanent magnet 920, the spring 915 bias moves the pilot spool 210 toward closure of ports 50A with little or no additional power input to the coil 220.

Of note, FIG. 10 shows the pilot spool 210 in the closed pilot position with the low speed adjuster 935 in the firm position. FIG. 11 shows the pilot spool 210 in the open pilot position with the low speed adjuster 935 in the firm position. FIG. 10 additionally shows the low speed adjuster metering edge 1005 and the spool valve assembly housing 1010, in accordance with an embodiment.

FIGS. 9-13 show an orifice block 955 having a tailored orifice 960 there through. The orifice 960 meters low speed damping fluid for low speed bump response of the suspension (when magnitude and rate is insufficient to open the shims). The size of the orifice 960 may be chosen to allow a desired amount or range of pressure to be applied to the valve body 230 through annulus 60 (ports). The use of the pilot spool 210 then further specifies that the pressure acts on the valve body 230 by modulating the flow restriction "downstream" (during a compression stroke of the suspension) of the orifice 960.

FIGS. 9-13 also show a pressure relief valve 965 or "blow off" valve, which is biased toward a closed position by Bellville spring(s) 970. The pressure relief valve 965 opens in response to an interior damper pressure above a predetermined threshold and thereby prevents damage to the damper and vehicle in the event of rapid pressure build up (usually associated with extreme suspension compression rate). The pressure relief valve 965 may have an adjustable threshold value (in one embodiment, by modification of the compression in the Bellville spring 970).

With reference again to FIGS. 14 and 15, it should be again noted that the set of sensors 1415 may be positioned in various locations on various types of vehicles. For example, in one embodiment, the set of sensors 1415 is positioned on the seat post of a bicycle. In another embodiment, a first set of sensors is positioned near the front wheel, while a second set of sensors is positioned near the rear wheel.

In one embodiment, the set of sensors includes three accelerometers. The accelerometers define a plane of the vehicle's body, such that the acceleration and the tilt (i.e., pitch and roll) of the vehicle body may be measured. When the set of sensors senses vehicle motion which is determined to meet and/or exceed a predetermined threshold, then the set of sensors sends a control signal to the control system attached to the vehicle suspension damper. The predetermined threshold may be a constant in one embodiment. However, in another embodiment, the predetermined threshold may be a variable based on other situations sensed on the vehicle. Once a control signal is received by the power source, the power source that is attached to the vehicle suspension damper becomes activated. Upon activation, the power source sends a current to the vehicle suspension damper, thereby causing the pilot valve assembly to move, as was described herein. Various methods of sensing via accelerometers and other forms of motion via sensors are known in the art.

As described herein, the vehicle upon which a set of sensors and a vehicle suspension damper may be attached may be a bicycle, a Side by Side, a snowmobile, etc. In the situation in which the vehicle is a Side by Side, such as a recreational off highway vehicle (ROV), more than one set of sensors may be used. For example, each wheel base (4) may include an embodiment of the system of the present technology. More specifically, each wheel base has attached thereto a different set of sensors, such as a set of accelerometers, each set being attached to a separate vehicle suspension damper. In another embodiment, one set of sensors (e.g., set of accelerometers) is attached to the ROV, as well as being attached to one or more vehicle suspension dampers.

If the ROV is traveling along a path that does not have any bumps or uneven terrain, then the vehicle suspension dampers may each be programmed to operate in a fully open mode (i.e., soft mode), in which the pilot spool valve 1545 of the pilot valve assembly 1510 is open to the flow ports 1550, thereby allowing fluid to flow from the damper cylinder interior 35 and into the reservoir 40 either through the first fluid flow path, with resistance provided by the shims 1530 (and no additional force provided by the valve member 1540), and/or through the control orifice 1535 that permits low speed bleed of damping fluid via the second fluid flow path. Thus, for example, when the right front tire of an ROV hits a large rock, the right front tire and a portion of the suspension attached to the tire (or attached wheel base) may rise upwards to move over the rock. The set of sensors attached to the ROV's right front side will sense the tire's upward movement, and will sense the tire reaching its peak upward movement (the peak of the rock), and will sense the tire beginning to move downwards. In one embodiment, the set of sensors on the ROV's right front side would send control signals to the vehicle suspension damper attached to the ROV's right front side throughout the tire's movement upward and downward. The control system attached to the vehicle suspension damper receives the control signals and causes the power source also attached to the vehicle suspension damper to deliver a current to the vehicle suspension damper in accordance with the control signals. In one embodiment, the delivered current functions to cause the pilot valve assembly 1510 to move to cause the flow ports 1550 to be at least partially blocked. As described herein, the pressure within the pilot pressure chamber 1520 increases due to the at least partially blocked flowports 1550, thereby causing the pressure within the area of the primary valve 1505 to increase. The valve member 1540, in response increased pressure in the area of the primary valve 1505, is urged against the shims 1530, thereby changing the damping characteristics of the shims 1530. Thus, the fluid flowing along the first fluid flow path from the damper cylinder interior 35 and through the piston port area 1525 is reduced, resulting in an increased damping effect to the vehicle's motion.

Embodiments enable a faster reaction time in applying damping than conventional shock absorbers provide. For example, in conventional mechanical inertia valves, the inertia valve senses a pressure wave (occurring at the speed of sound) after a vehicle's tire hits a bump. The mechanical inertia valve opens in response to receiving the pressure wave. However, the vehicle rider experiences some form of response to the terrain before the mechanical inertia valve has a chance to open into a "soft" mode. In embodiments using an electronic valve attached to accelerometers, the inertia valve opens into a "soft" mode before a motion significant enough for a vehicle rider to experience it has begun. For example, when a motion occurs, such as an ROV wheel base beginning to move upward while running over a large rock, and thus experience a gross wheel movement, an acceleration occurs first and is thus measured first by embodiments. A velocity, and then a displacement follows and are also measured in some embodiments. A control signal is sent from the set of accelerometers to the control system before enough of a vehicle motion has occurred such that the vehicle rider experiences a minimal response to the terrain and certainly less than would be provided should a mechanical inertia valve be provided. It should be appreciated that one or more set of sensors may be attached to each ROV wheel base, and independently control the vehicle suspension damper to account for and respond to various rolls and other types of vehicle motion. Embodiments enable the quick response to sensed acceleration such that the acceleration may be prevented, or at least reduced.

In one embodiment, one or more motion sensor is provided on a forward or front part of a vehicle, and a signal or signals from the one or more motion sensor is used to control a damper mounted on a rear part of the vehicle. In use, motion information learned from the movement of the front part of the vehicle can be used to anticipate movement of the rear part of the vehicle, and adjustments made to control the damper on the rear part accordingly.

Thus, one embodiment enables the control of both compression and the rebound state of the vehicle suspension damper, such that acceleration as measured at each wheel base is maintained as close to zero as possible throughout off-road riding over varied terrain. Embodiments enable the quick recovery from and/or prevention of a vehicle rider experiencing a vehicle's response to terrain, such as a roll.

In another embodiment, more than one type of sensor is used. For example and not limited to such example, an accelerometer and a gyrometer may be used. It should also be noted that numerous methods for determining orientation in a plane in space using a sensor attached to an object are well known in the art.

It should be noted that any of the features disclosed herein may be useful alone or in any suitable combination. While the foregoing is directed to embodiments of the present invention, other and further embodiments of the invention may be implemented without departing from the scope of the invention, and the scope thereof is determined by the claims that follow.

## Claims

1. A system for controlling a vehicle's motion, which system comprises:
a vehicle suspension damper (1410) comprising a damper cylinder containing a damping fluid, and an electronic valve (1500) comprising a pilot valve assembly (1510);
a first set of sensors (1415) configured to be coupled to the vehicle (1405) to sense vehicle motion and send control signals regarding these sensed vehicle motions to a control system of the vehicle suspension damper;
a power source coupled with the vehicle suspension damper;
the control system coupled with said power source and said vehicle suspension damper, said control system configured for receiving a control signal from said first set of sensors (1415) and for selectively activating said power source, wherein upon a selective activation of said power source, said power source delivers a current to said vehicle suspension damper;
the arrangement being such that, in use, when the power source delivers a current to the vehicle suspension damper the current causes the pilot valve assembly (1510) either open or close, thereby creating a hard mode having maximum damping force or a soft mode that provides a moderate damping force, respectively, so that damping forces within the vehicle suspension damper may be increased and decreased in quick response to sensed movement of the vehicle;
wherein said electronic valve (1500) comprises:
a primary valve (1540), the pilot valve assembly (1510) coupled with said primary valve, said pilot valve assembly configured for metering a flow of fluid to said primary valve, in response to at least said sensing; and
an orifice block (1515) coupled with said primary valve (1540) and comprising a control orifice (1535) therethrough, said control orifice configured for operating cooperatively with said pilot valve assembly (1510) in said metering said flow of fluid to said primary valve,
**characterized in that** said control orifice (1535) is a permanently open pathway within said orifice block (1515) and positioned between a damper cylinder interior and a pilot pressure chamber (1520) that is hydraulically between said orifice block and said pilot valve assembly (1510), said control orifice (1535) configured for causing a pressure drop of damper fluid before it enters said pilot pressure chamber (1520) from said damper cylinder interior.

2. A system as claimed in claim 1, wherein said pilot valve assembly (1510) is configured for said metering of flow of fluid to said primary valve (1540) in response to at least any of the following: an electro-mechanical device; a manually adjustable needle and jet arrangement; and a pressure signal from an outside pressure source.

3. A system as claimed in claim 1 or 2, further comprising a pressure relief valve (965) covering a fluid port, said pressure relief valve configured for being biased in a closed position by a set of springs (970) coupled therewith, and configured for opening in response to an interior damper pressure against said pressure relief valve being above a predetermined threshold, and wherein upon opening of said pressure relief valve, a portion of said fluid flows through said fluid port to reduce said interior damper pressure.

4. A system as claimed in claim 1, 2 or 3, wherein said control orifice (1535) is further configured for controlling a leak path along said permanently open pathway at low shaft speeds, and/or wherein said control orifice (1535) is further configured for reducing a pressure within said primary valve (1540) at high shaft speeds.

5. A system as claimed in claim 1, 2, 3 or 4, wherein said first set of sensors (1415) comprises a set of accelerometers.

6. A system as claimed in any preceding claim, further comprising an adjuster configured for moving a pilot valve of said pilot valve assembly upon a receipt of said current.

7. A system as claimed in any preceding claim, further comprising a second set of sensors configured to be coupled with said vehicle and said vehicle suspension damper, said second set of sensors configured for sensing said vehicle motion, wherein said second set of sensors is different from said first set of sensors.

8. A system as claimed in any preceding claim, wherein said power source comprises a solenoid (1580).

9. A system as claimed in any preceding claim, wherein said pilot valve assembly (1510) comprises an adjustable pilot spool configured for controlling a pressure inside said primary valve.

10. A system as claimed in claim 9, wherein said adjustable pilot spool comprises an electromagnetic pilot spool valve.

11. A system as claimed in claim 9 or 10, wherein said vehicle suspension damper further comprises:
a set of shims (1530) coupled to said primary valve (1540), wherein a position of said adjustable pilot spool corresponds to an increase of pressure inside said primary valve and an increase of an axial force on said set of shims.

12. A system as claimed in claim 6, or any claim dependent directly or indirectly thereon, wherein said vehicle suspension damper further comprises:
an armature (215) coupled with said adjuster and said pilot valve assembly (1510); and
a coil (220), wherein said coil electromagnetically interacts with said armature (215) in response to a current delivered from the power source, wherein when said armature moves, an adjustable pilot spool of said pilot valve assembly moves in corresponding axial positions relative to said coil;
and optionally an amount of said current to be delivered by said power source is predetermined.

13. A system as claimed in any preceding claim, wherein said vehicle suspension damper further comprises:
a base valve assembly comprising said pilot valve assembly, said primary valve, and said orifice block;
an elastic bladder (30); and
a first damping fluid flow path configured for providing a first fluid pathway for a movement of a first portion of said fluid through and between said damper cylinder, said base valve assembly, and said elastic bladder, wherein during at least one of a compression and a rebound of said vehicle suspension damper, said first portion of said fluid flows through said first fluid flow path, and during a damping of said compression and said rebound, said pilot valve assembly (1510) at least partially obstructs said first fluid flow path;
and optionally said pilot valve assembly comprises a pilot spool (1545) configured for obstructing a first flow port within said first fluid flow path between said damper cylinder (25) and said elastic bladder (30).

14. A system as claimed in claim 13, wherein said vehicle suspension damper further comprises:
a second damping fluid flow path configured for providing a second fluid pathway for a movement of a second portion of said fluid from said damper cylinder (25), into said base valve assembly, such that said second portion of said fluid applies pressure against said primary valve (1540), when said pilot valve assembly at least partially obstructs said first fluid flow path.

15. A vehicle comprising a system as claimed in any of claims 1 to 14.

## Patentansprüche

1. System zum Steuern der Bewegung eines Fahrzeugs, wobei das System umfasst:
einen Fahrzeugaufhängungsdämpfer (1410), umfassend einen ein Dämpfungsfluid enthaltenden Dämpferzylinder und ein elektronisches Ventil (1500), das eine Vorsteuerventilanordnung (1510) umfasst,
einen ersten Satz von Sensoren (1415), dazu ausgebildet, mit dem Fahrzeug (1405) gekoppelt zu werden, um eine Fahrzeugbewegung zu erfassen und Steuersignale bezüglich dieser erfassten Fahrzeugbewegungen an ein Steuersystem des Fahrzeugaufhängungsdämpfers zu senden,
eine Stromquelle, die mit dem Fahrzeugaufhängungsdämpfer gekoppelt ist,
wobei das Steuersystem mit der Stromquelle und dem Fahrzeugaufhängungsdämpfer gekoppelt ist, wobei das Steuersystem dazu ausgebildet ist, ein Steuersignal von dem ersten Satz von Sensoren (1415) zu erhalten und die Stromquelle selektiv zu aktivieren, wobei bei einer selektiven Aktivierung der Stromquelle diese Stromquelle einen Strom an den Fahrzeugaufhängungsdämpfer liefert,
wobei die Anordnung derart ist, dass die Stromquelle im Betrieb, wenn die Stromquelle einen Strom an den Fahrzeugaufhängungsdämpfer liefert, der Strom die Vorsteuerventilanordnung (1510) dazu veranlasst, entweder zu öffnen oder zu schließen, wodurch ein harter Modus mit maximaler Dämpfungskraft oder ein weicher Modus, der eine moderate Dämpfungskraft bereitstellt, erzeugt wird, so dass Dämpfungskräfte innerhalb des Fahrzeugaufhängungsdämpfers als schnelle Reaktion auf eine erfasste Bewegung des Fahrzeugs erhöht und verringert werden können,
wobei das elektronische Ventil (1500) umfasst:
ein Hauptventil (1540), wobei die Vorsteuerventilanordnung (1510) mit dem Hauptventil gekoppelt ist, wobei die Vorsteuerventilanordnung zum Dosieren eines Fluidstroms zu dem Hauptventil als Reaktion auf zumindest das Erfassen ausgebildet ist, und
einen Öffnungsblock (1515), der mit dem Hauptventil (1540) gekoppelt ist und eine Steueröffnung (1535) durch diesen hindurch umfasst, wobei die Steueröffnung dazu ausgebildet ist, mit der Vorsteuerventilanordnung (1510) beim Dosieren des Fluidstroms zu dem Hauptventil zusammenzuarbeiten,
**dadurch gekennzeichnet, dass** die Steueröffnung (1535) ein permanent offener Durchgang in dem Öffnungsblock (1515) ist und zwischen einem Dämpferzylinderinneren und einer Pilotdruckkammer (1520) angeordnet ist, die hydraulisch zwischen dem Öffnungsblock und der Vorsteuerventilanordnung (1510) liegt,
wobei die Steueröffnung (1535) dazu ausgebildet ist, einen Druckabfall von Dämpferfluid zu verursachen, bevor dieses aus dem Dämpferzylinderinneren in die Pilotdruckkammer (1520) eintritt.

2. System nach Anspruch 1, wobei die Vorsteuerventilanordnung (1510) zum Dosieren des Fluidflusses zu dem Hauptventil (1540) als Reaktion auf wenigstens eines der Folgenden ausgebildet ist: eine elektromechanische Vorrichtung, eine manuell einstellbare Nadel- und Düsenanordnung und ein Drucksignal von einer äußeren Druckquelle.

3. System nach Anspruch 1 oder 2, das weiter ein Druckentlastungsventil (965) umfasst, das einen Fluidanschluss abdeckt, wobei das Druckentlastungsventil dazu ausgebildet ist, durch einen Satz mit diesem gekoppelter Federn (970) in eine geschlossene Position vorgespannt zu werden, und dazu ausgebildet ist, als Reaktion auf einen Dämpferinnendruck gegen das Druckentlastungsventil zu öffnen, das über einem vorgegebenen Schwellenwert liegt, und wobei beim Öffnen des Druckentlastungsventils ein Teil des Fluids durch den Fluidanschluss strömt, um den Dämpferinnendruck zu verringern.

4. System nach Anspruch 1, 2 oder 3, wobei die Steueröffnung (1535) weiter zum Steuern eines Leckagewegs entlang des permanent offenen Durchgangs bei niedrigen Wellengeschwindigkeiten ausgebildet ist und/oder wobei die Steueröffnung (1535) weiter zum Reduzieren eines Drucks innerhalb des Hauptventils (1540) bei hohen Wellengeschwindigkeiten ausgebildet ist.

5. System nach Anspruch 1, 2, 3 oder 4, wobei der erste Satz von Sensoren (1415) einen Satz von Beschleunigungsmessern umfasst.

6. System nach einem der vorhergehenden Ansprüche, weiter umfassend eine Verstellvorrichtung, die zum Bewegen eines Pilotventils der Vorsteuerventilanordnung bei Erhalt des Stroms ausgebildet ist.

7. System nach einem der vorhergehenden Ansprüche, weiter einen zweiten Satz von Sensoren umfassend, der dazu ausgebildet ist, mit dem Fahrzeug und dem Fahrzeugaufhängungsdämpfer gekoppelt zu werden, wobei der zweite Satz von Sensoren zum Erfassen der Fahrzeugbewegung ausgebildet ist, wobei der zweite Satz von Sensoren von dem ersten Satz von Sensoren verschieden ist.

8. System nach einem der vorhergehenden Ansprüche, wobei die Stromquelle ein Solenoid (1580) umfasst.

9. System nach einem der vorhergehenden Ansprüche, wobei die Vorsteuerventilanordnung (1510) einen einstellbaren Vorsteuerkolben umfasst, der zum Steuern eines Drucks innerhalb des Hauptventils ausgebildet ist.

10. System nach Anspruch 9, wobei der einstellbare Vorsteuerkolben ein elektromagnetisches Vorsteuerkolbenventil umfasst.

11. System nach Anspruch 9 oder 10, wobei der Fahrzeugaufhängungsdämpfer weiter umfasst:
einen mit dem Hauptventil (1540) gekoppelten Satz von Ausgleichsunterlagen (1530), wobei eine Position des einstellbaren Vorsteuerkolbens einem Anstieg des Drucks innerhalb des Hauptventils und einer Erhöhung einer axialen Kraft auf den Satz von Ausgleichsunterlagen entspricht.

12. System nach Anspruch 6 oder einem direkt oder indirekt von diesem abhängigen Anspruch, wobei der Fahrzeugaufhängungsdämpfer weiter umfasst:
einen Anker (215), der mit der Verstellvorrichtung und der Vorsteuerventilanordnung (1510) gekoppelt ist, und
eine Spule (220), wobei die Spule in Reaktion auf einen von der Stromquelle gelieferten Strom elektromagnetisch mit dem Anker (215) wechselwirkt, wobei sich, wenn sich der Anker bewegt, ein einstellbarer Vorsteuerkolben der Vorsteuerventilanordnung in entsprechende axiale Positionen bezüglich der Spule bewegt,
und optional eine Menge des von der Stromquelle zu liefernden Stroms vorgegeben ist.

13. System nach einem der vorhergehenden Ansprüche, wobei der Fahrzeugaufhängungsdämpfer weiter umfasst:
eine Basisventilanordnung, die die Vorsteuerventilanordnung, das Hauptventil und den Öffnungsblock umfasst,
eine elastische Blase (30) und
einen ersten Dämpfungsfluidströmungsweg, der ausgebildet ist zum Bereitstellen eines ersten Fluidwegs für eine Bewegung eines ersten Teils des Fluids durch und zwischen dem Dämpferzylinder, der Basisventilanordnung und der elastischen Blase, wobei während wenigstens einem einer Kompression und eines Rückfederns des Fahrzeugaufhängungsdämpfers der erste Teil des Fluids durch den ersten Fluidströmungsweg strömt, und wobei während einer Dämpfung der Kompression und des Rückfederns die Vorsteuerventilanordnung (1510) den ersten Fluidströmungsweg zumindest teilweise blockiert,
und wobei optional die Vorsteuerventilanordnung einen Vorsteuerkolben (1545) umfasst, der zum Versperren eines ersten Strömungsanschlusses innerhalb des ersten Fluidströmungswegs zwischen dem Dämpferzylinder (25) und der elastischen Blase (30) ausgebildet ist.

14. System nach Anspruch 13, wobei der Fahrzeugaufhängungsdämpfer weiter umfasst:
einen zweiten Dämpfungsfluidströmungsweg, der ausgebildet ist zum Bereitstellen eines zweiten Fluidwegs für eine Bewegung eines zweiten Teils des Fluids von dem Dämpferzylinder (25) in die Basisventilanordnung, so dass der zweite Teil des Fluids Druck auf das Hauptventil (1540) ausübt, wenn die Vorsteuerventilanordnung den ersten Fluidströmungsweg zumindest teilweise blockiert.

15. Fahrzeug, umfassend ein System nach einem der Ansprüche 1 bis 14.

## Revendications

1. Système permettant de commander le mouvement d'un véhicule, lequel système comprend :
un amortisseur de suspension de véhicule (1410) comprenant un cylindre d'amortisseur contenant un fluide d'amortissement, et une soupape électronique (1500) comprenant un ensemble soupape pilote (1510) ;
un premier ensemble de capteurs (1415) conçus pour être couplés au véhicule (1405) de manière à détecter le mouvement du véhicule et envoyer des signaux de commande concernant ces mouvements de véhicule détectés à un système de commande de l'amortisseur de suspension du véhicule ;
une source d'alimentation couplée à l'amortisseur de suspension du véhicule ;
le système de commande étant couplé à ladite source d'alimentation et audit amortisseur de suspension du véhicule, ledit système de commande étant conçu pour recevoir un signal de commande dudit premier ensemble de capteurs (1415) et pour activer sélectivement ladite source d'alimentation, lors d'une activation sélective de ladite source d'alimentation ladite source d'alimentation délivrant un courant audit amortisseur de suspension du véhicule ;
l'agencement étant tel que, lors de l'utilisation, lorsque la source d'alimentation délivre un courant à l'amortisseur de suspension du véhicule, le courant provoque soit l'ouverture soit la fermeture de l'ensemble soupape pilote (1510), créant ainsi un mode dur présentant une force d'amortissement maximale ou un mode mou qui fournit une force d'amortissement modérée, respectivement, de sorte que les forces d'amortissement à l'intérieur de l'amortisseur de suspension du véhicule puissent être augmentées et diminuées en réponse rapide au mouvement détecté du véhicule ;
ladite soupape électronique (1500) comprenant :
une soupape primaire (1540), l'ensemble soupape pilote (1510) étant couplé à ladite soupape primaire, ledit ensemble soupape pilote étant conçu pour doser le débit de fluide vers ladite soupape primaire, en réponse à au moins ladite détection ; et
un bloc d'orifice (1515) couplé à ladite soupape primaire (1540) et comprenant un orifice de commande (1535) à travers celui-ci, ledit orifice de commande étant conçu pour fonctionner en coopération avec ledit ensemble soupape pilote (1510) lors dudit dosage dudit débit de fluide vers ladite soupape primaire,
**caractérisé en ce que** ledit orifice de commande (1535) est un passage ouvert en permanence à l'intérieur dudit bloc d'orifice (1515) et positionné entre l'intérieur du cylindre d'amortisseur et une chambre de pression pilote (1520) qui se trouve hydrauliquement entre ledit bloc d'orifice et ledit ensemble soupape pilote (1510),
ledit orifice de commande (1535) étant conçu pour provoquer une chute de pression du fluide d'amortisseur avant qu'il n'entre dans ladite chambre de pression pilote (1520) depuis ledit intérieur du cylindre d'amortisseur.

2. Système selon la revendication 1, ledit ensemble soupape pilote (1510) étant conçu pour ledit dosage du débit de fluide vers ladite soupape primaire (1540) en réponse à au moins l'un des éléments suivants : un dispositif électromécanique ; un agencement d'aiguille et de jet réglables manuellement ; et un signal de pression provenant d'une source de pression extérieure.

3. Système selon la revendication 1 ou 2, comprenant en outre une soupape de décompression (965) recouvrant un orifice de fluide, ladite soupape de décompression étant conçue pour être sollicitée dans une position fermée par un ensemble de ressorts (970) couplés à celle-ci, et étant conçue pour s'ouvrir en réponse au fait que la pression d'amortisseur intérieure contre ladite soupape de décompression est supérieure à un seuil prédéfini, et lors de l'ouverture de ladite soupape de décompression, une partie dudit fluide s'écoule à travers ledit orifice de fluide pour réduire ladite pression d'amortisseur intérieure.

4. Système selon la revendication 1, 2 ou 3, ledit orifice de commande (1535) étant en outre configuré pour commander un trajet de fuite le long dudit trajet ouvert en permanence à de faibles vitesses d'arbre, et/ou ledit orifice de commande (1535) étant en outre configuré pour réduire la pression à l'intérieur de ladite soupape primaire (1540) à des vitesses d'arbre élevées.

5. Système selon la revendication 1, 2, 3 ou 4, ledit premier ensemble de capteurs (1415) comprenant un ensemble d'accéléromètres.

6. Système selon l'une quelconque des revendications précédentes, comprenant en outre un ajusteur conçu pour déplacer une soupape pilote dudit ensemble soupape pilote lors de la réception dudit courant.

7. Système selon l'une quelconque des revendications précédentes, comprenant en outre un second ensemble de capteurs conçus pour être couplés audit véhicule et audit amortisseur de suspension du véhicule, ledit second ensemble de capteurs étant conçu pour détecter ledit mouvement du véhicule, ledit second ensemble de capteurs étant différent dudit premier ensemble de capteurs.

8. Système selon l'une quelconque des revendications précédentes, ladite source d'alimentation comprenant un solénoïde (1580).

9. Système selon l'une quelconque des revendications précédentes, ledit ensemble soupape pilote (1510) comprenant un tiroir pilote réglable conçu pour commander la pression à l'intérieur de ladite soupape primaire.

10. Système selon la revendication 9, ledit tiroir pilote réglable comprenant une soupape à tiroir pilote électromagnétique.

11. Système selon la revendication 9 ou 10, ledit amortisseur de suspension du véhicule comprenant en outre :
un ensemble de cales (1530) couplées à ladite soupape primaire (1540), la position dudit tiroir pilote réglable correspondant à une augmentation de pression à l'intérieur de ladite soupape primaire et à une augmentation de la force axiale sur ledit ensemble de cales.

12. Système selon la revendication 6, ou toute revendication dépendant directement ou indirectement de celle-ci, ledit amortisseur de suspension du véhicule comprenant en outre :
une armature (215) couplée audit ajusteur et audit ensemble soupape pilote (1510) ; et
une bobine (220), ladite bobine interagissant électromagnétiquement avec ladite armature (215) en réponse à un courant délivré par la source d'alimentation, lorsque ladite armature se déplace, un tiroir pilote réglable dudit ensemble soupape pilote se déplaçant dans des positions axiales correspondantes par rapport à ladite bobine ;
et éventuellement la quantité dudit courant à délivrer par ladite source d'alimentation étant prédéfinie.

13. Système selon l'une quelconque des revendications précédentes, ledit amortisseur de suspension du véhicule comprenant en outre :
un ensemble soupape de base comprenant ledit ensemble soupape pilote, ladite soupape primaire et ledit bloc d'orifice ;
une vessie élastique (30) ; et
un premier trajet d'écoulement de fluide d'amortissement conçu pour fournir un premier trajet de fluide pour le mouvement d'une première partie dudit fluide à travers et entre ledit cylindre d'amortisseur, ledit ensemble soupape de base et ladite vessie élastique, pendant au moins un élément parmi une compression et une rebond dudit amortisseur de suspension du véhicule ladite première partie dudit fluide s'écoulant à travers ledit premier trajet d'écoulement de fluide, et pendant l'amortissement de ladite compression et dudit rebond ledit ensemble soupape pilote (1510) obstruant au moins partiellement ledit premier trajet d'écoulement de fluide ;
et éventuellement ledit ensemble soupape pilote comprenant un tiroir pilote (1545) conçu pour obstruer un premier orifice d'écoulement dans ledit premier trajet d'écoulement de fluide entre ledit cylindre d'amortisseur (25) et ladite vessie élastique (30).

14. Système selon la revendication 13, ledit amortisseur de suspension du véhicule comprenant en outre :
un second trajet d'écoulement de fluide d'amortissement conçu pour fournir un second trajet de fluide pour le mouvement d'une seconde partie dudit fluide à partir dudit cylindre d'amortisseur (25), dans ledit ensemble soupape de base, de sorte que ladite seconde partie dudit fluide applique une pression contre ladite soupape primaire (1540), lorsque ledit ensemble soupape pilote obstrue au moins partiellement ledit premier trajet d'écoulement de fluide.

15. Véhicule comprenant un système selon l'une quelconque des revendications 1 à 14.
